# EUROPEAN PATENT APPLICATION

(11) **EP 3 511 876 A1**
(43) Date of publication of application: **17.07.2019**
(21) Application number: 18160997.5
(22) Date of filing: 09.03.2018
(51) Int. Cl.: G06Q 10/00, G06Q 10/10

(54) **METHOD AND SYSTEM FOR MARKER COMMUNITY TO ACCESS AGGREGATED MARKING TECHNOLOGIES**

(30) Priority: 10.01.2018 IN 201821001182
(71) Applicant: Tata Consultancy Services Limited, Maharashtra (IN)
(72) Inventor: SHAH, Viral Prakash, Patlipada, Thane West- 400 607 (IN); DHAIRIAMANI, Annie, Patlipada, Thane West - 400 607. Maharashtra (IN); BORA, Sangeeta, Patlipada, Thane West- 400 607. Maharashtra (IN)
(74) Representative: Goddar, Heinz J.

(57) **Abstract**

A system and method for aggregating marking technologies to evaluate various type of assessments of one or more candidates. It provides a platform to receive the assessments and registration of a plurality of markers. While registration, the marker must upload their credentials as asked by the system. Further, the platform has a predefined set of parameters to select markers from the list of registered markers to evaluate assessment. An interested marker may raise a request for a specific assessment of his interest mentioned on the platform. The platform may share/publish result of evaluation of assessments of each candidate.

## Description

### PRIORITY

The present invention claims priority to India Application (Title: Method and system for marker community to access aggregated marking technologies) No. 201821001182, filed in India on January 10, 2018.

### FIELD OF THE INVENTION

The embodiments herein generally relates to the field of providing a platform to evaluate assessments of one or more candidates by aggregating different marking technologies, and, more particularly, to a method and system for providing access to an aggregated marking technologies to one or more private individuals belonging to an institution or one or more markers of a shared community.

### BACKGROUND

Digital evolution has marked its presence in the field of assessments and this has resulted into a variety in the mode or channel of assessments that a candidate can undergo like online, pen/paper based, optical response sheets, recorded multimedia and so on. The approach of marking also becomes different based on the mode of assessing the candidates. Example, multiple choice question responses are marked with an automated intelligent technique, whereas subjective type or a recorded media response of online or offline assessments require a manual intervention of a marker with the required expertise in the subject or domain. Currently there may exist different systems on different platforms and technologies for evaluation purposes and markers do not have a single platform that can handle all the different needs of an assessor with respect to evaluation channel and mode. This platform provides an aggregated system of different marking / evaluation technologies such that the mode of access for the markers is singular irrespective of the channel of assessment. In the existing process, the markers remain restricted to their institutions and do not have opportunities to participate beyond their affiliation. This invention also concerns with creating communities of markers having expertise in their domain who can participate in marking process of a plurality of institutions conducting different modes of assessments on different channels and technologies. The institutions would be able to leverage expert markers from a marker pool thus making the platform as the largest marker sourcing hub in the world. Any educational institute or assessment conducting body can access the marker pool and the platform provides ability to aggregate the assessment channel and provide integrated marking platform.

### SUMMARY

The following presents a simplified summary of some embodiments of the disclosure in order to provide a basic understanding of the embodiments. This summary is not an extensive overview of the embodiments. It is not intended to identify key/critical elements of the embodiments or to delineate the scope of the embodiments. Its sole purpose is to present some embodiments in a simplified form as a prelude to the more detailed description that is presented below.

In view of the foregoing, an embodiment herein provides a system for evaluating one or more assessments of one or more candidates. The system comprises a user interface, a platform, a memory and a processor. The user interface provides a plurality of inputs. The platform provided by a platform owner to facilitate a plurality of markers to register themselves for participating in the evaluation of assessments of one or more candidates. The processor further comprises a digital representation module, a registration module, a selection module, an assignment module, and a publishing module. The receiving module is configured to receive one or more assessments of one or more candidates for evaluation. The one or more assessments includes a pen-paper based assessment, an online assessment, an optical response sheets, and a recorded multimedia. The digital representation module is configured to generate a digital representation of each received one or more assessments of the one or more candidates. The registration module is configured to register a plurality of markers for conducting evaluation of one of the generated digital representations, wherein the plurality of markers include one or more private individuals belonging to one or more institutions or one or more markers of a shared community available to all institutions or assessment conducting bodies. The selection module is configured to select at least one marker from the registered plurality of markers based on a predefined set of parameters of selection, wherein the predefined set of parameters of selection includes education qualifications, previous experience and appreciations, and quality of work done by the marker. The assignment module is configured to assign the generated digital representation with the selected set of markers for evaluating the received one or more assessment and finally the publishing module is configured to publish a result of assessment of each shared digital representations of each received one or more assessments of the one or more candidates.

In another aspect the embodiment here provides a method for evaluating one or more assessments of one or more candidates. Initially the process receives one or more assessments of one or more candidates for evaluation. The one or more assessments may include different channels of assessment like a pen-paper based assessment, an online assessment, an optical response sheets, and a recorded multimedia and so on. The embodiment here provides a method for generating a digital representation of each received one or more assessments of the one or more candidates. Further, the platform provides to register the plurality of markers for conducting evaluation of one of the generated digital representations, wherein the plurality of markers include one or more private individuals belonging to one or more institutions or one or more markers of a shared community available to all institution. In the next step, it selects at least one marker from the registered plurality of markers based on a predefined set of parameters of selection, wherein the predefined set of parameters of selection includes education qualifications, previous experience and appreciations, and quality of work done by the marker in previous evaluation. Further, it assigns the generated digital representation with the selected at least one marker for evaluating the received one or more assessment and finally it publishes a result of assessment of each shared digital representations of each received one or more assessments of the one or more candidates.

In yet another embodiment herein provides a non-transitory computer medium storing one or more instruction which when executed by a processor on a system, cause the processor to perform method for evaluating one or more assessments of one or more candidates. Initially the process receives one or more assessments of one or more candidates for evaluation. The one or more assessments may include different channels of assessment like a pen-paper based assessment, an online assessment, an optical response sheets, and a recorded multimedia and so on. The embodiment here provides a method for generating a digital representation of each received one or more assessments of the one or more candidates. Further, the platform provides to register the plurality of markers for conducting evaluation of one of the generated digital representations, wherein the plurality of markers include one or more private individuals belonging to one or more institutions or one or more markers of a shared community available to all institution. In the next step, it selects at least one marker from the registered plurality of markers based on a predefined set of parameters of selection, wherein the predefined set of parameters of selection includes education qualifications, previous experience and appreciations, and quality of work done by the marker in previous evaluation. Further, it assigns the generated digital representation with the selected at least one marker for evaluating the received one or more assessment and finally it publishes a result of assessment of each shared digital representations of each received one or more assessments of the one or more candidates.

It should be appreciated by those skilled in the art that any block diagram herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computing device or processor, whether or not such computing device or processor is explicitly shown.

### BRIEF DESCRIPTION OF THE DRAWINGS

The embodiments herein will be better understood from the following detailed description with reference to the drawings, in which:
Fig. 1 illustrates a block diagram for evaluating one or more assessments of one or more candidates according to an embodiment of the present disclosure; and
Fig. 2a & 2b is a flowchart illustrating the steps involved in evaluating one or more assessments of one or more candidates according to an embodiment of the present disclosure.

### DETAILED DESCRIPTION OF EMBODIMENTS

The embodiments herein and the various features and advantageous details thereof are explained more fully with reference to the non-limiting embodiments that are illustrated in the accompanying drawings and detailed in the following description. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

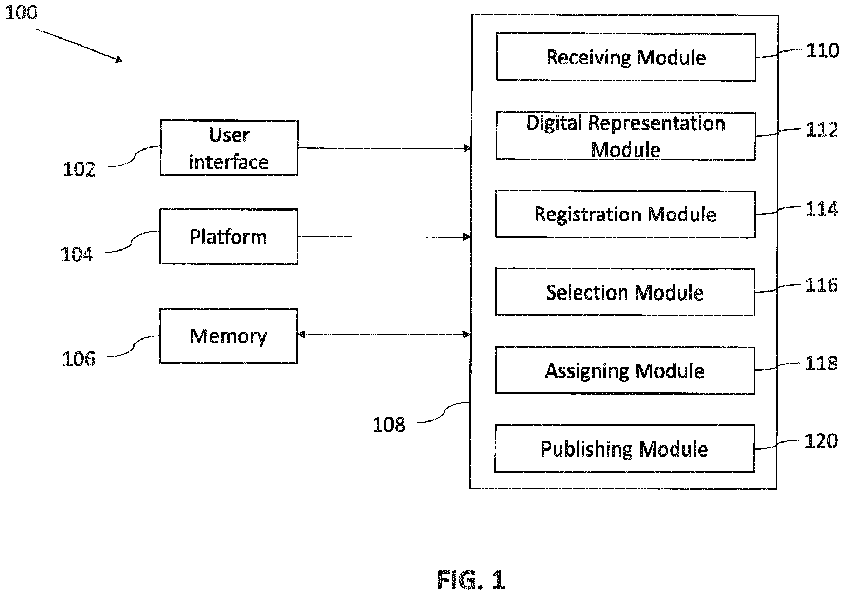

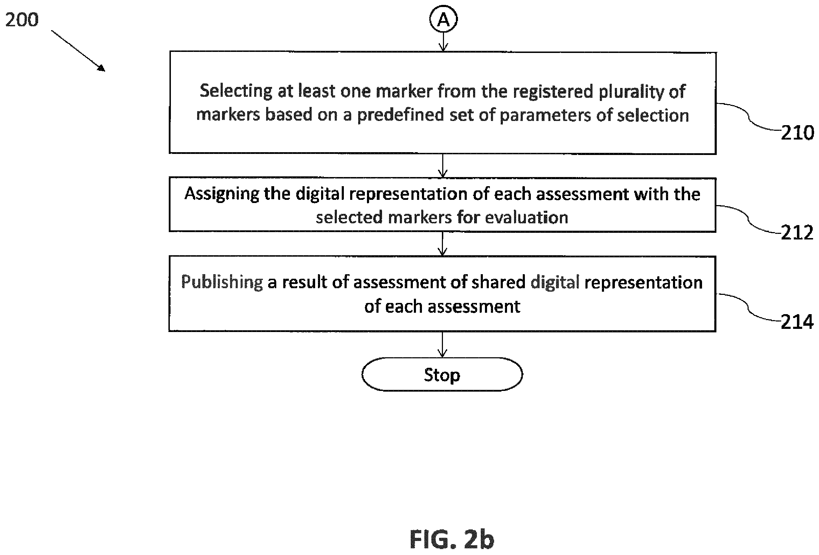

Referring now to the drawings, and more particularly to Fig. 1 through Fig. 2a & 2b, where similar reference characters denote corresponding features consistently throughout the figures, there are shown preferred embodiments and these embodiments are described in the context of the following exemplary system and/or method.

According to an embodiment of the disclosure, a system 100 for evaluating one or more assessments of one or more candidates is shown in the block diagram of Fig. 1. The system 100 is configured to receive one or more assessments of one or more candidates for evaluations and further it generates digital representation of received one or more assessments. A plurality of markers includes one or more private individuals belonging to one or more institutions or one or more markers of the shared community available to all institutions. The private individual or one or more markers of the shared community can request for the marking of assessment in case the marking requires the skill set of the markers. Further, the system is configured to select at least one marker from the registered markers and assign the generated digital representation for evaluation.

According to an embodiment of the disclosure, the system 100 consists of a user interface 102, a platform 104, a memory 106 and a processor 108 as shown in the block diagram of Fig. 1. The processor 108 is in communication with the memory 106. The processor 108 is configured to execute a plurality of algorithms stored in the memory 106. The processor 108 further includes a plurality of modules for performing various functions. The plurality of modules may include, but not limited to, a receiving module 110, a digital representation module 112, a registration module 114, a selection module 116, an assigning module 118, a publishing module 120, and a revenue management module 122.

According to an embodiment of the disclosure the user interface 102 is configured to provide a plurality of inputs to the processor 108. The user interface / input modules can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite.

According to an embodiment of the disclosure, the platform owner of the system 100 is responsible for providing the platform 104 and enabling the ecosystem for aggregating the one or more markers either the one more private individuals belonging to an institution or one or more markers from the shared community. The platform owner is also providing the platform services like user interfaces, receiving assessments, generating digital representation of the received assessments, registration of a plurality of markers and publishing a result of assessment. The platform is also responsible for providing interface to the institutions for the selection of markers before assigning assessments for marking. It would be appreciated that the platform also provides ability to the institutions to analyze separate requests from one or more markers to evaluate a specific assessment aligned with his skills.

According to an embodiment of the disclosure, the system 100 includes the receiving module 110 configured for receiving one or more assessments to evaluate for one or more candidates. The received one or more assessments may include different channels of assessment for which evaluation is required by a marker like pen-paper based assessment, online assessment, optical response sheets, case studies, recorded multimedia and so on.

According to an embodiment of the disclosure, the system 100 includes the digital representation module 112 configured to generate a digital representation of each received one or more assessments of the one or more candidates.

According to an embodiment of the disclosure, the system 100 includes the registration module 114 configured for registering a plurality of markers for conducting evaluation of one or more digital representations of assessments. The registration module 114 is configured to register each of the plurality of markers on the platform 104. It would be appreciated that the marker can improve the visibility of their profile to the institutions by adding their competencies, certifications and education qualifications at any point of time after registering on the platform.

It would be appreciated that in the present disclosure there are two models, but not limited to, in which the plurality of marking arrangements can be designed or provisioned. First, an enterprise model, wherein it will hold the structure of a single institution with its own one or more private markers with capability to assign assessment evaluation to one or more private belonging to the institution. In addition to this it has additional capability to outsource the one or more markers from a shared community. At the time of provisioning, the platform owner will enable one or more marking level configurations such as enable marking of digital assessments, enable marking of paper-pen assessments, message broadcast management, answer book management, bench marking and standardization capability to facilitate the evaluation of the plurality of markers and identify those who require improvement in their skill set, enabling marker sign up and enabling marker booking from a shared pool of plurality of markers.

Further, a second, a shared community model, wherein the platform owner enables registration from both the one or more private individuals belonging to an institution and the one or more markers of a shared community for evaluation of digital assessments. Institutions can also sign up in this model for configuring and managing the marking of assessments.

According to an embodiment of the disclosure, the system 100 also includes the selection module 116. The selection module 116 is configured to select at least one marker from the registered plurality of markers on the platform 104. The selection is based on a predefined set of parameters of selection such as education qualification of marker, previous experience and appreciation received by the marker and the quality of work he had delivered in previous works. Further, the selection is also based on the result of the evaluation of markers aligning to a set of predefined benchmarking parameters. The one or more private individuals belonging to an institution or the one or more markers of the shared community can request for the marking of assessment in case the marking is aligned with the skill set of the marker.

According to an embodiment of the disclosure, the system 100 includes the assignment module 118. The assignment module 118 is configured to assign one or more digital representation of the assessments for marking.

According to an embodiment of the disclosure, the system 100 includes the publishing module 120. The publishing module 120 is configured to publish result of the marking of one or more digital representation of assessments shared with at least one marker by the platform.

According to an embodiment of the disclosure, the system 100 includes the revenue management module 122. The platform provides institutions the capability to configure different payment options as remuneration to the markers participating in the assessment evaluation organized by the institutions. Remuneration may be in the form of tokens or credit points or actual money in the currency of the marker's geography. Multiple modes of revenue configuration are available to the institutions with a plurality of rules to determine how many tokens points or how much money is to be remitted to the marker based on some parameters. The parameters which help in the rule creation includes marker performance, marker domain subject expertise level, experience, all other attributes of the marker as also attributes of the assessment conducted like scale of assessment, assessment channel, amount of question responses to be evaluated, complexity of the either subject or domain or assessment.

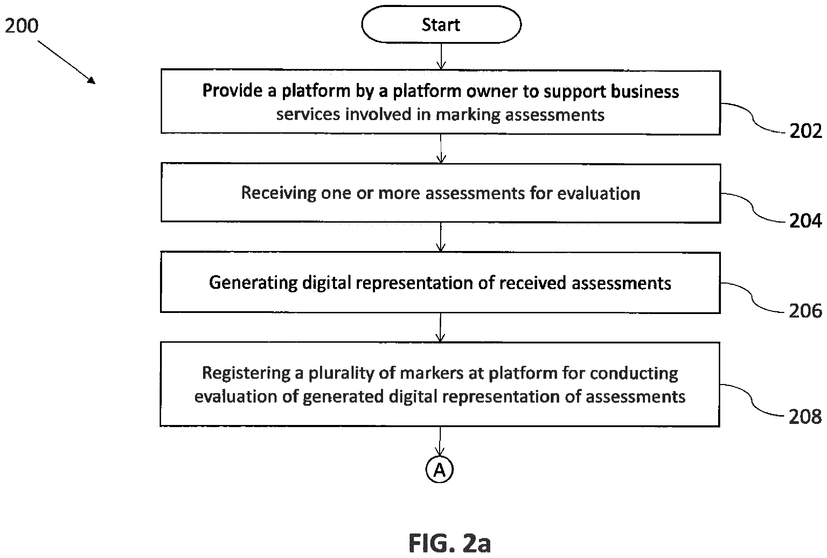

In operation, a flowchart 200 illustrating the steps involved for aggregating a plurality of marking technologies to evaluate one or more assessments of one or more candidates is shown in Fig. 2a & 2b. Initially at step 202, the platform 104 is provided by the platform owner to support one or more business services involved in marking of one or more assessments.

In the next step 204, one or more assessments of one or more candidates for evaluations are received at a receiving module 110. The one or more assessments may include different channels of assessments for which marker evaluation is required like pen-paper based assessment, online assessment, optical response sheets, case studies, recorded multimedia and so on. It is to be noted that the list of assessment is not limited to the mentioned as above. It may include any type of assessment of a candidate for evaluation.

In the next step 206, each of the plurality of markers are registered on the platform 104. The plurality of markers include one or more private individuals belonging to an institution, one or more markers of the shared community. The selection is based on a predefined set of parameters of selection such as education qualification of marker, previous experience and appreciation received by the marker and the quality of work he had delivered in previous works. Further, the selection is also based on the result of the evaluation of markers aligning to a set of predefined benchmarking parameters. The one or more private individuals belonging to an institution or the one or more markers of the shared community can request for the marking of assessment in case the marking is aligned with the skill set of the marker.

At step 208, the platform owner selects at least one marker from the registered plurality of markers at a selection module 116 based on a predefined set of parameters. Wherein, the predefined set of parameters of selection includes education qualifications, previous experience and appreciations, and quality of work done by the marker.

In the next step 210, the one or more assessments are assigned to the selected at least one marker from the plurality of markers using an assigning module 118. It would be appreciated that each marker is eligible to raise a request for evaluating a specific assessment as displayed on the platform, if the markers believes his profile are matched with the given specific assessment.

In the last step 212, a result of each assessment is published and shared by the marker to the institutions.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein provides a system and method for evaluating one or more assessments of one or more candidates. It provides a platform to receive the assessments and registration of a plurality of markers. While registration, the marker must upload their credentials as asked by the system. Further, the platform has a predefined set of parameters to select markers from the list of registered markers to evaluate assessment. An interested marker may raise a request for a specific assessment of his interest, domain and availability as mentioned on the platform. The platform may provide capability to share/publish result of evaluation of assessments of each candidate.

It is, however to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk-read only memory (CD-ROM), compact disk-read/write (CD-R/W) and DVD.

A data processing system suitable for storing and/or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

Input/output (I/O) devices (including but not limited to keyboards, displays, pointing devices, etc.) can be coupled to the system either directly or through intervening I/O controllers. Network adapters may also be coupled to the system to enable the data processing system to become coupled to other data processing systems or remote printers or storage devices through intervening private or public networks. Modems, cable modem and Ethernet cards are just a few of the currently available types of network adapters.

A representative hardware environment for practicing the embodiments may include a hardware configuration of an information handling/computer system in accordance with the embodiments herein. The system herein comprises at least one processor or central processing unit (CPU). The CPUs are interconnected via system bus to various devices such as a random access memory (RAM), read-only memory (ROM), and an input/output (I/O) adapter. The I/O adapter can connect to peripheral devices, such as disk units and tape drives, or other program storage devices that are readable by the system. The system can read the inventive instructions on the program storage devices and follow these instructions to execute the methodology of the embodiments herein.

The system further includes a user interface adapter that connects a keyboard, mouse, speaker, microphone, and/or other user interface devices such as a touch screen device (not shown) to the bus to gather user input. Additionally, a communication adapter connects the bus to a data processing network, and a display adapter connects the bus to a display device which may be embodied as an output device such as a monitor, printer, or transmitter, for example.

The preceding description has been presented with reference to various embodiments. Persons having ordinary skill in the art and technology to which this application pertains will appreciate that alterations and changes in the described structures and methods of operation can be practiced without meaningfully departing from the principle, spirit and scope.

## Claims

1. A method for evaluating one or more assessments of one or more candidates, the method comprising a processor implemented steps of:
providing a platform by a platform owner to support one or more business services involved in marking of one or more assessments;
receiving, at a receiving module, one or more assessments of one or more candidates for evaluation;
generating, at a digital representation module, a digital representation of each received one or more assessments of the one or more candidates;
registering, at a registration module, a plurality of markers for conducting evaluation of one of the generated digital representations;
selecting, at a selection module, at least one marker from the registered plurality of markers based on a predefined set of parameter of selection;
assigning, at an assigning module, the generated digital representation of each assessment with the selected at least one marker for evaluation; and
publishing a result of assessment of each shared digital representation of each assessment.

2. The method of claim 1, wherein the plurality of markers include one or more private markers belonging to an institution or one or more markers of a shared community.

3. The method of claim 1, wherein the predefined set of parameters of selection includes education qualifications, previous experience and appreciations, and quality of work done by the marker.

4. The method of claim 1, wherein one or more predefined payment models to share revenue among the platform owner and the marker.

5. The method of claim 1, wherein the one or more registered markers following a predefined procedure to update their profile details.

6. The method of claim 1, wherein the one or more assessments includes pen-paper based assessment, online assessment, optical response sheets, and recorded multimedia.

7. A system for evaluating one or more assessments of one or more candidates, the system comprising:
a memory with a plurality set of instructions;
a processors communicatively coupled with the memory to execute the plurality set of instruction;
a platform by a platform owner configured to support one or more business services involved in marking of one or more assessments;
a receiving module configured to receive one or more assessments of one or more candidates for evaluation;
a digital representation module configured to generate a digital representation of each received one or more assessments of the one or more candidates;
a registration module configured to register a plurality of markers for conducting evaluation of one of the generated digital representations;
a selection module configured to select at least one marker from the registered plurality of markers based on a predefined set of parameters of selection;
an assignment module configured to assign the generated digital representation with the selected set of markers for evaluating the received one or more assessments; and
a publishing module configured to publish a result of assessment of each shared digital representations of each received one or more assessments of the one or more candidates.

8. The system of claim 7, wherein the plurality of markers includes one or more private individuals belonging to an institution and one or more markers of a shared community.

9. The system of claim 7, wherein the predefined set of parameters of selection includes education qualifications, previous experience and appreciations, and quality of work done by the marker.

10. The system of claim 7, wherein the one or more registered markers following a predefined procedure to update their profile details.

11. The system of claim 7, wherein the one or more assessments includes pen-paper based assessment, online assessment, optical response sheets, and recorded multimedia.

12. The system of claim 7, wherein the plurality of markers can raise a request for evaluation to a specific assessment as mentioned on the platform of their interest.

13. A non-transitory computer medium storing one or more instruction which when executed by a processor on a system, cause the processor to perform method for evaluating one or more assessments of one or more candidates comprising:
providing a platform by a platform owner to support one or more business services involved in marking of one or more assessments;
receiving, at a receiving module, one or more assessments of one or more candidates for evaluation;
generating, at a digital representation module, a digital representation of each received one or more assessments of the one or more candidates;
registering, at a registration module, a plurality of markers for conducting evaluation of one of the generated digital representations;
selecting, at a selection module, at least one marker from the registered plurality of markers based on a predefined set of parameter of selection;
assigning, at an assigning module, the generated digital representation of each assessment with the selected at least one marker for evaluation; and
publishing a result of assessment of each shared digital representation of each assessment.
